# EUROPEAN PATENT APPLICATION

(11) **EP 1 826 377 A2**
(43) Date of publication of application: **29.08.2007**
(21) Application number: 06112103.4
(22) Date of filing: 31.03.2006
(51) Int. Cl.: F02D 19/06, F02B 61/02

(54) **Fuel change-over system and change-over method for motorcycle or motor-assisted bicycle**

(30) Priority: 23.02.2006 CN 200610024100
(71) Applicant: ROTAREX STAR, Schanghai 201300 (CN)
(72) Inventor: THOME, Frank, 201300, SHANGHAI/CN (LU); CAO, Guangbin, 201300, SHANGHAI/CN (CN); YU, Wenjia, 201300, SHANGHAI/CN (CN)
(74) Representative: Ghioni, Carlo Raoul Maria

(57) **Abstract**

The invention discloses a fuel change-over system for a motorcycle or motor assisted bicycle. The system comprises a solenoid-actuated gasoline valve (70) for controlling opening/closing of a gasoline supply passage, a solenoid-actuated LPG valve (40) for controlling opening/closing of a LPG supply passage, a gasoline pump (80), a change-over switch (140), a control device (100), and a indication device (150). During a change-over from gasoline to LPG, the control device (100) makes the pump (80) starting and operating so that any rest gasoline in a carburetor (60) of the vehicle can be drawn by the pump (80) back to a tank (90) of the vehicle. Moreover, the invention provides a fuel change-over method for conducting a smooth fuel change-over between gasoline and LPG in a dual-fuel motorcycle or motor assisted bicycle during its running or stop time. This will be contributive to popularize motorcycles and motor assisted bicycles.

## Description

### Technical field

The present invention relates generally to a fuel change-over system and a corresponding change-over method thereto for a motorcycle or motor-assisted bicycle (called jointly by motorcycle(s) hereafter).

### Background of the invention

Nowadays, a motorcycle which uses clean energy sources such as LPG is becoming a new popular traffic vehicle, for the emissions of the gasoline-burning motorcycles have polluted the atmosphere heavily. Therefore, a LPG-burning motorcycle is and will be in a great demand in the world market. The gas refilling of LPG motorcycles, however, is a big problem in some countries, which needs the public administrations concerned to invest finance to build sufficient LPG refilling stations and service facilities associated with them. This is a big obstacle for popularizing LPG motorcycles in some countries. If a dual-fuel motorcycle can be developed that uses LPG as a primary fuel and gasoline as a secondary one, the dual-fuel motorcycle of this type will be adopted in large amounts in the cities where there are less LPG refilling stations, it will make its users unnecessary to worry about the trouble in gas refilling, harmful emissions will be reduced, and the environmental atmosphere will be less polluted accordingly. At present, there have existed sophisticated single-fuel motorcycles, that is, gasoline burning ones and LPG burning ones, in wide use. A gasoline-burning motorcycle uses a carburetor to mix fuel with air and to form a combustible mixture, while a LPG-burning motorcycle uses a mixer to mix LPG with air. It is a difficult problem to combine a carburetor and a mixer together in a volume-limited motorcycle body, and it is another difficult problem to make a smooth change-over between the two fuels under a precondition not to influence user's riding. So far, in this field, there has not been a technology capable of solving the problems. Though some technologies for change-over between two fuels have been successfully used in the fields of cars and buses, the difference between a four-wheel vehicle and a two-wheel one is rather great, and most cars and buses are electronically fuel-injected, therefore, there is also a great difference in fuel change-over between a car and a motorcycle.

### Summary of the invention

The object of the invention is to provide a fuel change-over system for conducting smooth and save changing-over between gasoline and LPG in a motorcycle.

The another object of the invention is to provide a fuel change-over system for conducting smooth and safe changing-over between gasoline and LPG during user's riding or in stop time.

The still another object of the invention is to provide a fuel change-over method for conducting smooth and safe changing-over between gasoline and LPG in a motorcycle.

In one aspect of the invention, the invention provides a fuel change-over system for conducting fuel change-over of a dual-fuel motorcycle. The system is used to conduct changing-over between gasoline supply and LPG supply and comprises: a solenoid-actuated gasoline valve for controlling opening/closing of a gasoline supply passage, it is connected at its one end to a gasoline tank and at its the other end to a carburetor; a solenoid-actuated LPG valve for controlling opening/closing of a LPG supply passage, it is connected at its one end to a LPG source and at its the other end to a mixer, and a outlet of the mixer is connected to a inlet of the carburetor; a change-over switch for conducting changing-over operation. The change-over system further comprises: a pump whose inlet is connected to the carburetor for drawing any rest gasoline in the carburetor back to the gasoline tank; a control device which is electrically connected to the pump, the change-over switch, the solenoid-actuated gasoline valve, and the solenoid-actuated LPG valve, respectively. In changing-over from gasoline to LPG, the control device makes the pump starting so as to draw any rest gasoline in the carburetor back to the gasoline tank.

In another aspect of the invention, the solenoid-actuated LPG valve is attached on a pressure reducing valve which is connected at its one end to the LPG source and at its the other end to the mixer.

In still another aspect of the invention, the mixer is connected at its outlet to an inlet of the carburetor and is provided with an air cleaner at its inlet.

In yet another aspect of the invention, the fuel change-over system is provided with an electronic control box for acquiring a signal from the magneto of a motorcycle. The electronic control box is connected with the solenoid-actuated LPG valve. When the magneto is stopped, the electronic control box transmits a control signal to make the solenoid-actuated LPG valve closed and thereby to shut off LPG supply passage.

In a further aspect of the invention, the control device further includes a condition memory device which is able to remember if gasoline or LPG is used before electrical power supply is turned off until the motorcycle and its magneto is power on and started again. The change-over switch is a two-position button switch and can be triggered by a voltage signal. The change-over switch is not triggered when the power supply of a motorcycle is turned off.

In a further aspect of the invention, the fuel change-over system further includes a fuel attribute indicator for indicating if gasoline or LPG is used at that right time. The fuel attribute indicator is electrically connected with the control device.

In a further aspect of the invention, the control device can control the gasoline pump so that the operation time length of the pump is proportional to the gasoline chamber volume of the carburetor.

In a further aspect of the invention, during a changing-over from LPG to gasoline, the control device controls the solenoid-actuated LPG valve so as to make it closed at a time delay; and during a changing-over from gasoline to LPG, the control device controls the solenoid-actuated gasoline valve so as to make it open at a time delay.

In a further aspect of the invention, the control device is provided with a change-over disabling device which is used to disable any following changing-over operation in a predetermined period after the last changing-over is triggered.

Furthermore, the invention provides a fuel change-over method for conducting fuel change-over in a dual-fuel motorcycle. The method comprises: during a changing-over from LPG to gasoline, as soon as the change-over switch of the change-over system is operated, the control device of the change-over system makes the solenoid-actuated gasoline valve open immediately so as to make gasoline passage through, and at the same time, the solenoid-actuated LPG valve is closed at a time delay; during a changing-over from gasoline to LPG, as soon as the change-over switch of the change-over system is operated, the control device of the change-over system makes the solenoid-actuated gasoline valve closed immediately so as to shut off gasoline passage, and at the same time, the gasoline pump in the fuel change-over system is started, and the solenoid-actuated LPG valve is opened at a time delay.

With the fuel change-over system and the fuel change-over method according to the invention, a rider can conduct a smooth fuel changing-over between gasoline and LPG during whose running or in stop time. This will be contributive to popularize motorcycles.

### Brief description of drawings

Fig. 1 is a schematic diagram of a general layout of the fuel change-over system according to the invention; and
Fig. 2 is a wiring principle diagram of the control device of the fuel change-over system according to the invention.

### Detailed description of the invention

The invention is described below in detail in reference to the accompanying drawings.

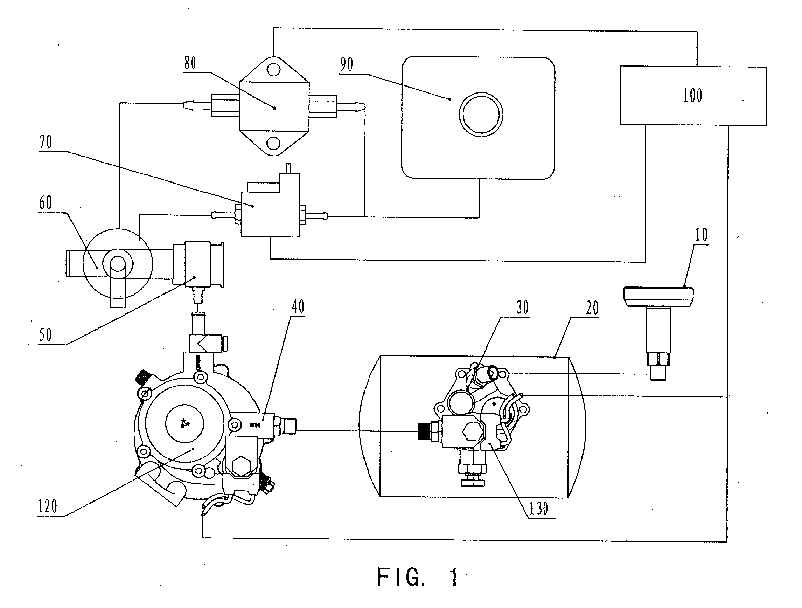

Fig.1 is a schematic diagram of a general layout of the fuel change-over system for a motorcycle according to the invention, which is used for conducting changing-over between gasoline and LPG. The fuel change-over system comprises a solenoid-actuated gasoline valve 70 for opening/closing a gasoline supply passage and a solenoid-actuated LPG valve 40 for opening/closing a LPG supply passage. The solenoid-actuated gasoline valve 70 is connected at its one end to a gasoline tank 90 and at its the other end to a carburetor 60. The solenoid-actuated LPG valve 40 is attached on a pressure-reducing valve 120 which is used for adjusting LPG pressure into a mixer 50. The pressure-reducing valve 120 is connected at its one end to a LPG container 20 and at its other end to the mixer 50 which is used for mixing LPG and air. An outlet of the mixer 50 is connected to an inlet of the carburetor 60, and thereby it is possible to use a common fuel throttle wire, and an air cleaner (not shown) is provided at an inlet of the mixer 50. As shown in Fig. 1, a combination valve 30 is provided in the LPG container 20 and is connected to a LPG refilling valve 10 which is used for filling LPG into LPG container 20.

The fuel change-over system comprises a change-over switch for triggering a changing-over operation. Preferably, the change-over switch is a two-position button switch and can be triggered by a voltage signal. Thus, the change-over switch will not be triggered by a mal-operation in the case that the main power supply is turned off.

The fuel change-over system of the invention further comprises a gasoline pump 80 which is connected at its inlet to a discharge port at the bottom of the carburetor 60 and at its outlet to a gasoline tank 90 so that it can draw any rest gasoline in the carburetor 60 back to the gasoline tank 90.

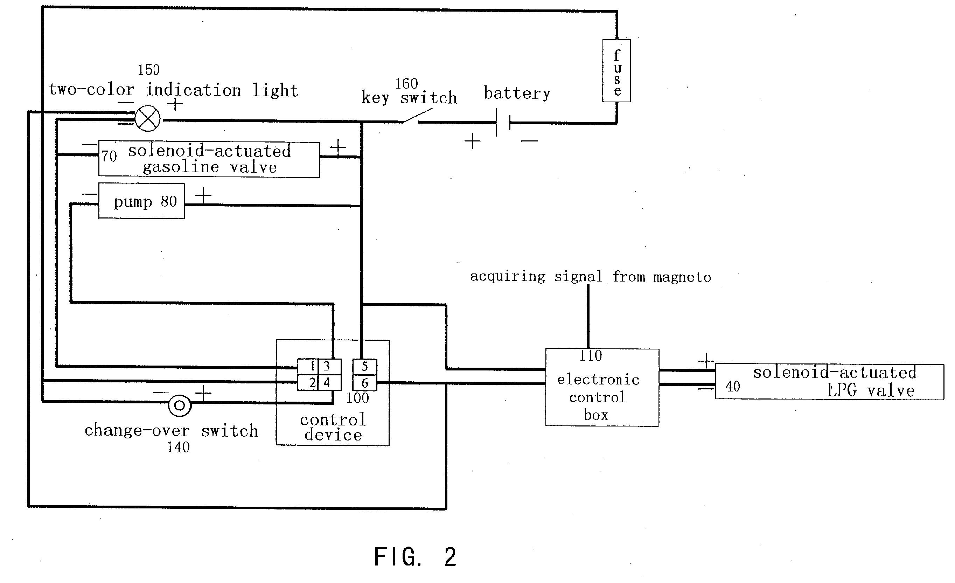

Furthermore, the fuel change-over system includes a control device 100. As shown in Fig. 2, the control device 100 has six control legs, wherein leg 1 is connected to the solenoid-actuated gasoline valve 70 and can be connected in parallel with a double-color indication light 150 for indicating the condition of the solenoid-actuated gasoline valve 70, e.g. red light's lighting up indicates that the solenoid-actuated gasoline valve 70 is open and gasoline is used; leg 6 is connected to solenoid-actuated LPG valve 40 and also connected with the double-color indication light 150 for indicating the condition of the solenoid-actuated LPG valve 40, e.g. green light's lighting up indicates that the solenoid-actuated LPG valve 40 is open and LPG is used; leg 2 is connected to the negative of the battery; leg 3 to gasoline pump 80; leg 4 to the change-over switch 140; and leg 5 to the key switch 160 of a motorcycle.

The control device 100 carries out its control functions as follows: in a changing over from LPG to gasoline, as soon as the change-over switch 140 is pressed down, the control device 100 makes solenoid-actuated gasoline valve 70 open immediately so that the gasoline supply passage becomes through; meanwhile the solenoid-actuated LPG valve 40 on the pressure-reducing valve 120 is closed at a time delay and the LPG supply passage is closed at a time delay accordingly. The double-color indication light 150 gives out a red light in the time a motorcycle runs on gasoline. In a changing over from gasoline to LPG, as soon as the change-over switch 140 is pressed again, the control device 100 makes solenoid-actuated gasoline valve 70 closed immediately so that the gasoline supply passage shut off, and the pump 80 is put into operation for a suitable predetermined period to draw any rest gasoline in the carburetor 60 back to the gasoline tank 90 and then is stopped; meanwhile the solenoid-actuated LPG valve 40 on the pressure-reducing valve 120 is opened at a time delay and the LPG supply passage becomes through accordingly. The double-color indication light 150 gives out a green light in the time a motorcycle runs on gasoline.

In the control process described above, the length of the time delay at which the solenoid-actuated LPG valve 40 is closed or opened is dependent on the displacement volume of a specific motorcycle and on the internal configuration of the carburetor 60; the length of the period for which the gasoline pump 80 works is dependent on the size of the carburetor gasoline chamber. Generally, the larger the gasoline chamber is the longer the period for which the gasoline pump 80 shall work after the solenoid-actuated gasoline valve 70 is closed.

Preferably, the control device 100 further includes a condition memory device which is able to remember the condition in which if gasoline or LPG is used before electrical power supply is turned off until power supply is turned on again, thereby, when the motorcycle is restarted, the control device 100 can hold the motorcycle to use the fuel that was used before its electrical power supply is turned off. In the case that the change-over switch 140 is a voltage triggered button-type switch, in combination with the condition memory device, a program malfunction or mal-operation which may cause the two fuel burned simultaneously can be avoided.

Furthermore, the control system 100 includes a change-over disabling device which is used to disable any following changing-over operation in a predetermined period (e.g. 10 seconds) after the change-over switch 140 is pressed down last-time, this is to ensure that two successive fuel change-overs can not be conducted in a stipulated time length so as to avoid the program out of order and the two fuels burned simultaneously.

Moreover, in order to ensure motorcycle's stability and safety, the control device 100 of the fuel change-over system of the invention is provided with an electronic control box 110 for acquiring a signal from a magneto of the motorcycle. The electronic control box 110 is connected with the solenoid-actuated LPG valve 40. As soon as the motorcycle stops traveling and its magneto stops as well, the electronic control box 110 transmits a control signal to make the solenoid-actuated LPG valve 40 closed so as to shut off LPG passage.

In addition, as shown in Fig. 1, an additional solenoid-actuated LPG valve 130 is provided in the container which is LPG source. The valve, together and at the same time with the solenoid-actuated LPG valve 40 attached on the pressure-reducing valve 120, is controlled by the control device 100. This is advantageous to raise the safety of the whole system.

While the preferred embodiment of the invention has been described and illustrated, it is obvious that those who are skillful in this technical field can make many changes and modifications without departing from the spirit and principle of the invention. For example, the fuel change-over system according to the invention can be modified to suit motorcycles of different displacements and carburetors of different sizes by adjusting the time delay of the solenoid-actuated LPG valve 40 in the system. Therefore, the scope of the invention is only defined by the claims.

## Claims

1. A fuel change-over system which is used on a dual-fuel motorcycle or motor assisted bicycle for conducting its fuel change-over, more particularly for conducting change-over between gasoline supply and LPG supply, is **characterized in that** the fuel change-over system comprises:
a solenoid-actuated gasoline valve for controlling opening/closing of a gasoline supply passage, the solenoid-actuated gasoline valve being connected at its one end to a gasoline tank and at its the other end to a carburetor;
a solenoid-actuated LPG valve for controlling opening/closing of a LPG supply passage, the solenoid-actuated LPG valve being connected at its one end to a LPG source and at its the other end to a mixer;
a change-over switch for conducting changing-over operation;
a gasoline pump which is connected at its inlet to the carburetor and at its outlet to the gasoline tank so that the pump can draw the gasoline in the carburetor back to the tank;
a control device which is electrically connected to the pump, the change-over switch, the solenoid-actuated gasoline valve, and the solenoid-actuated LPG valve, respectively, the control device is configured to start the pump to draw the gasoline in the carburetor back to the tank as soon as the change-over switch is triggered when a changing-over from gasoline to LPG is conducted.

2. The fuel change-over system according to claim 1, wherein the solenoid-actuated LPG valve is attached on a pressure-reducing valve, and the pressure-reducing valve is connected at its one end to the LPG source and at its the other end to the mixer.

3. The fuel change-over system according to claim 1, wherein the mixer is connected at its outlet to an inlet of the carburetor and is provided with an air cleaner at its inlet.

4. The fuel change-over system according to claim 1, wherein the fuel change-over system is provided with an electronic control box for acquiring a signal from a magneto of a motorcycle and motor assisted bicycle, the electronic control box is connected with the solenoid-actuated LPG valve, the electronic control box transmits a control signal to make the solenoid-actuated LPG valve closed and thereby to shut off LPG passage as soon as the magneto stops.

5. The fuel change-over system according to claim 1, wherein further comprising a condition memory device which is able to remember the condition in which if gasoline or LPG is used before the electrical power supply of the control device is turned off until the power supply is turned on again, thereby, when the motorcycle or motor assisted bicycle is restarted, the control device can hold it to use the fuel that was used before its electrical power supply is turned off, the change-over switch is a voltage triggered button-type switch, which is not triggered when the electrical power supply of the motorcycle or motor assisted bicycle is turned off.

6. The fuel change-over system according to claim 1, wherein the fuel change-over system comprises a fuel attribute indicator for indicating if gasoline or LPG is used by the vehicle at that right time, the indicator is connected with the control device.

7. The fuel change-over system according to claim 1, wherein the control device can control the gasoline pump so that the length of its operation time is proportional to the gasoline chamber volume of the carburetor.

8. The fuel change-over system according to claim 1, wherein during a changing-over from LPG to gasoline, the control device controls the solenoid-actuated LPG valve so as to make it closed at a time delay; and during a changing-over from gasoline to LPG, the control device controls the solenoid-actuated gasoline valve so as to make it open at a time delay.

9. The fuel change-over system according to claim 1, wherein the fuel change-over system includes a change-over disabling device which is used to disable any following changing-over operation in a predetermined period after the last-time change-over is carried out.

10. A fuel change-over method for conducting fuel change-over of a dual-fuel motorcycle or motor assisted bicycle via a fuel change-over system, comprising:
during a changing-over from LPG to gasoline, as soon as a change-over switch of the change-over system is operated, a control device of the change-over system makes a solenoid-actuated gasoline valve thereof open immediately so as to make gasoline supply passage through, and at the same time, a solenoid-actuated LPG valve thereof is closed at a time delay; during a changing-over from gasoline to LPG, as soon as the change-over switch of the change-over system is operated, the control device of the change-over system makes the solenoid-actuated gasoline valve closed immediately so as to shut off the gasoline supply passage, and at the same time, the gasoline pump in the fuel change-over system is started to work and the solenoid-actuated LPG valve is opened at a time delay.
